# EUROPEAN PATENT SPECIFICATION

(11) **EP 4 086 580 B1**
(45) Date of publication and mention of the grant of the patent: **16.10.2024**
(21) Application number: 21207474.4
(22) Date of filing: 10.11.2021
(51) Int. Cl.: G01C 21/36, G08G 1/0969, G10L 15/22

(54) **VOICE INTERACTION METHOD, APPARATUS AND SYSTEM, VEHICLE, AND STORAGE MEDIUM**
VERFAHREN, VORRICHTUNG UND SYSTEM ZUR SPRACHINTERAKTION, FAHRZEUG UND SPEICHERMEDIUM
PROCÉDÉ D'INTERACTION VOCALE, APPAREIL ET SYSTÈME, VÉHICULE, ET SUPPORT DE STOCKAGE

(30) Priority: 27.08.2021 CN 202110992223
(43) Date of publication of application: 09.11.2022
(73) Proprietor: Guangzhou Xiaopeng Motors Technology Co., Ltd., Tianhe District Guangzhou Guangdong (CN)
(72) Inventor: ZHAO, Yongliang, Guangzhou (CN)
(74) Representative: Ran, Handong

(56) References cited:
- CN-A- 111 722 905
- CN-A- 112 309 373
- JP-A- 2015 175 818
- US-A1- 2014 067 403
- US-A1- 2015 331 664

## Description

### Field of Invention

The present disclosure relates to the field of transportation, and in particular to a voice interaction method, a voice interaction apparatus, a voice interaction system, a vehicle, and a computer-readable storage medium.

### Background

Under navigation guided pilot (NGP), surrounding reality display for autonomous driving can only support dragging of a map by gestures, and cannot support enabling and disabling of display of energy supplement points on a map. If support of enabling and disabling of display of energy supplement points on a map is desired, a user has to first exit to a standard map interface of traditional in-vehicle navigation, and then perform a corresponding selection operation. However, during travelling of the vehicle, it is inconvenient and unsafe to distract the user and allow him/her to operate the map by hand for adjustment of display of energy supplement points.

US 2015/331664 A1 discloses a voice recognition device and display method. The voice recognition device can adjust the output of a voice recognition result according to the priority of a display of the recognition result with respect to display information other than the voice recognition result at all times while recognizing an uttered voice. The voice recognition device therefore prevents the acquisition of other information important for the user from being blocked due to the display of the recognition result.

JP 2015 175818 A describes a navigation device capable of performing route guidance to a set destination. The navigation device includes: a voice recognition part that recognizes an input voice; an operation determination section that, when the voice recognition part recognizes the voice, determines whether or not the navigation device is in operation of route guidance; an object facility search section that, when the operation determination section determines as in route guidance operation, searches an object facility on a route corresponding to the voice recognized by the voice recognition part; and a notification part that notifies the search result searched by the object facility search section.

US 2014/067403 A1 relates to a method of managing speech interfaces to computer-based services. The method includes beginning a first speech session that is carried out in a vehicle over a short-range wireless connection between a vehicle occupant and a mobile device; detecting an initiation of a second speech session while the first speech session is being carried out; determining an assigned priority level of the first speech session relative to an assigned priority level of the second speech session; and when the assigned priority level of the second speech session has a higher priority than the assigned priority level of the first speech session, carrying out a session-appropriate action on the first speech session.

### Summary of Invention

In view of the foregoing, the present disclosure provides a voice interaction method, a voice interaction apparatus, a voice interaction system, a vehicle, and a computer-readable storage medium. Aspects of the present invention are set out in the accompanying claims.

The present disclosure provides a voice interaction method for a vehicle according to claim 1. The vehicle communicates with a server and has a pre-installed voice interaction software development kit on a map client thereof.

In some embodiments, controlling the display of energy supplement points on the map client based on the instruction callback includes:
controlling the map client to register by subscription and monitor the instruction callback issued by the voice interaction software development kit; and
when the instruction callback is detected, controlling an on/off state of a corresponding display control for energy supplement points based on the instruction callback so as to adjust the display of energy supplement points.

In some embodiments, controlling the on/off state of the corresponding display control for energy supplement points based on the instruction callback so as to adjust the display of energy supplement points includes:
converting the instruction callback into a voice control event in response to the instruction callback;
converting the voice control event to generate a modification command; and
executing the modification command to control the on/off state of the display control for energy supplement points.

In some implementation manners, controlling the on/off state of the corresponding display control for energy supplement points based on the instruction callback so as to control the display of energy supplement points further includes:
turning on an energy supplement points display switch and displaying energy supplement points when the state of the display control for energy supplement points is "on"; or
turning off an energy supplement points display switch and concealing energy supplement points when the state of the display control for energy supplement points is "off".

In some embodiments, turning on the energy supplement points display switch and displaying the energy supplement points, when the state of the display control for energy supplement points is "on", includes:
clustering and displaying a plurality of the energy supplement points that meet a preset condition.

In some embodiments, the voice interaction method further includes:
generating configuration information of the map client based on the on/off state of the display control for energy supplement points; and
sending the configuration information to the server to allow the server to synchronize the configuration information into corresponding user information, the map client being configured to obtain the configuration information in the corresponding user information for a currently logged-in user from the server.

The present disclosure also provides a voice interaction apparatus for a vehicle according to claim 9.

The present disclosure also provides a voice interaction system according to claim 10. The voice interaction system includes a vehicle and a server. The vehicle includes a map client with a pre-installed voice interaction software development kit.

The map client is configured to acquire a user's speech request, and transmit the speech request to the server, the speech request being related to display of energy supplement points for the vehicle.

The server is configured to receive the speech request from the map client, generate an instruction to display energy supplement points based on the speech request, and return the instruction to display energy supplement points to the voice interaction software development kit.

The map client is further configured to receive, after the voice interaction software development kit receives the instruction to display energy supplement points that was generated and returned by the server in response to the speech request, an instruction callback issued by the voice interaction software development kit based on the instruction to display energy supplement points, and 2. control the display of energy supplement points on the map client based on the instruction callback.

The present disclosure further provides a vehicle. The vehicle includes a memory having a computer program stored thereon, and a processor. The computer program, when executed by the processor, implements the voice interaction method according to any one of the above embodiments.

The present disclosure further provides a non-volatile computer-readable storage medium for a computer program. The computer program, when executed by one or more processors, implements the voice interaction method according to any one of the above embodiments.

According to the present disclosure, by preconfiguring a voice interaction software development kit on a map client of a vehicle, when a speech request related to display of energy supplement points on the map client is acquired, the speech request can be transmitted to a server; the server, after receiving the speech request, performs semantic recognition on the speech request to generate an instruction to display energy supplement points and returns the instruction to display energy supplement points to the voice interaction software development kit; the voice interaction software development kit issues a corresponding instruction callback based on the instruction to display energy supplement points, and the map client is controlled based on the instruction callback to 2. control the display of energy supplement points. This implements control of the display of energy supplement points on the map client by way of voice input.

Additional aspects and advantages of the embodiments of the present disclosure will be partly given in the following description, and partly become self-evident from the following description, or be appreciated through the practice of the present disclosure.

### Brief Description of Drawings

The above and/or additional aspects and advantages of the present disclosure will become self-evident and easily understood from the description of the embodiments in combination with the accompanying drawings below, in which:
Fig. 1 is a schematic flowchart of a voice interaction method according to some embodiments of the present disclosure;
Fig. 2 is a schematic diagram of modules of a voice interaction apparatus according to some embodiments of the present disclosure;
Fig. 3 is a schematic diagram of a scenario on a map client in an autonomous driving surrounding reality display mode according to some embodiments of the present disclosure;
Fig. 4 is a schematic diagram of display of energy supplement points on a map client according to some embodiments of the present disclosure;
Figs. 5 to 7 each are a flowchart of a voice interaction method according to some embodiments of the present disclosure;
Figs. 8 and 9 each are a scenario on a map client according to some embodiments of the present disclosure; and
Figs. 10 to 14 each are a flowchart of a voice interaction method according to some embodiments of the present disclosure.

### Detailed Description

The following is a detailed description of embodiments of the present disclosure whose examples are shown in the accompanying drawings. In the drawings, same or similar reference numerals always indicate same or similar elements or elements having same or similar functions. The embodiments described below by reference to the accompanying drawings are exemplary and are merely intended to explain the embodiments of the present disclosure and are not to be construed as limiting the embodiments of the present disclosure.

Navigation guided pilot (NGP) means that a vehicle can conduct navigation assisted autonomous driving from point A to B based on a navigation route set by a driver. The NGP function covers use scenarios such as automatic overtaking, automatic speed limit adjustments, optimized lane choices, automatic switching to highways, automatic entering and exiting ramps, automatic emergency avoidance during lane change, etc., and can exhibit good performance in China's road scenarios such as identification of and avoidance from traffic cones, avoidance from large trucks, night overtaking reminding, avoidance from faulty vehicles, and super car following on congested roads. The realization of all these depends not only on the development level of technical solutions, but also on indispensable third-generation navigation capable of man-machine co-navigation. The navigation can provide more accurate road information to NGP to optimize the experience of autonomous driving assistance.

As a high-level autonomous driving assistance function, compared with ordinary in-vehicle navigation, NGP has more requirements and standards for the third-generation navigation capable of man-machine co-navigation, including integrity, richness, man-machine interaction, high precision, freshness, reliability, navigating, positioning, etc., and has higher requirements on coverage.

On this basis, autonomous driving sensing, a positioning system, a high-precision map, and high-definition rendered images are fused for reality display to thus achieve the function of "surrounding reality (SR) display for autonomous driving" carried in mass-produced vehicles.

When NGP is used, surrounding reality display can show boundaries and division of responsibilities between manual driving and autonomous driving, and enables, by way of accurate risk recognition and clear hierarchical takeover reminding, the driver to clearly know when he/she needs to take over the vehicle. Furthermore, the function integrates dynamic traffic data and surroundings perception data, including real-time feedback on information such as real-time traffic information, lane-level road conditions, event information services, traffic prediction, etc., thereby bringing users a superior experience of lane-level automatic navigation.

However, during surrounding reality display, when it is necessary to perform some operations, the map client has to exit to a standard map interface of traditional in-vehicle navigation.

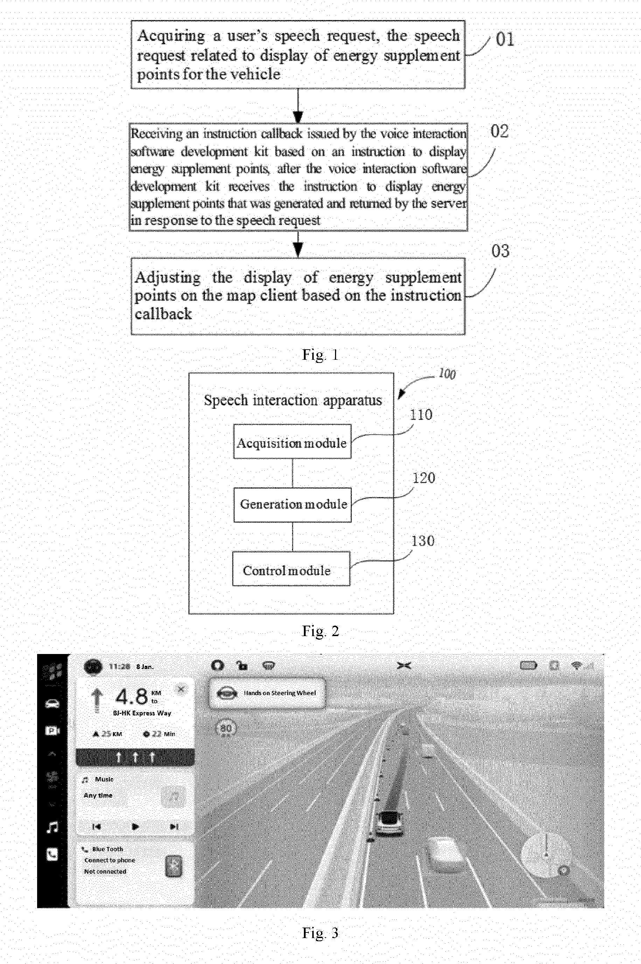

Referring to Fig. 1, the present disclosure provides a voice interaction method for a vehicle which has a pre-installed voice interaction software development kit on a map client thereof. The voice interaction method includes the following steps.

In step 01, a user's speech request is acquired, the speech request being related to display of energy supplement points for the vehicle.

In step 02, after the voice interaction software development kit receives an instruction to display energy supplement points that was generated and returned by a server in response to the speech request, an instruction callback issued by the voice interaction software development kit based on the instruction to display energy supplement points is received.

In step 03, the display of energy supplement points is adjusted on the map client based on the instruction callback.

Accordingly, referring to Fig. 2, embodiments of the present disclosure also provide a voice interaction apparatus 100. The voice interaction method according to the embodiments of the present disclosure may be implemented by the voice interaction apparatus 100.

The voice interaction apparatus 100 includes an acquisition module 110, a generation module 120, and a control module 130. Step 01 may be implemented by the acquisition module 110; step 02 may be implemented by the generation module 120; and step 03 may be implemented by the control module 130. In other words, the acquisition module 110 is configured to acquire a user's speech request, the speech request being related to display of energy supplement points for the vehicle; the generation module 120 is configured to receive, after a voice interaction software development kit receives an instruction to display energy supplement points that was generated and returned by a server in response to the speech request, an instruction callback issued by the voice interaction software development kit based on the instruction to display energy supplement points; and the control module 130 is configured to adjust the display of energy supplement points on a map client based on the instruction callback.

The embodiments of the present disclosure further provide a vehicle. The vehicle includes a memory and a processor. The memory has stored thereon a computer program. The processor is configured to: acquire a user's speech request, the speech request being related to display of energy supplement points for the vehicle; receive, after a voice interaction software development kit receives an instruction to display energy supplement points that was generated and returned by a server in response to the speech request, an instruction callback issued by the voice interaction software development kit based on the instruction to display energy supplement points; and adjust the display of energy supplement points on a map client based on the instruction callback.

According to the voice interaction method, the voice interaction apparatus, and the vehicle of the present disclosure, by preconfiguring a voice interaction software development kit on a map client of the vehicle, when the vehicle acquires a speech request related to display of energy supplement points for the vehicle, the speech request may be transmitted to a server; the server, after receiving the speech request, responds by generating an instruction to display energy supplement points related to the speech request and returning the instruction to display energy supplement points to the voice interaction software development kit; and the voice interaction software development kit issues a corresponding instruction callback based on the instruction to display energy supplement points, and then the display of energy supplement points is adjusted on the map client based on the instruction callback. In this way, the user can adjust the display of energy supplement points on a standard map interface by means of voice, thereby satisfying his/her need for energy supplement for the vehicle.

Specifically, the vehicle includes a screen with a graphical user interface display, and a speech recognition device capable of voice interaction. The vehicle may include a vehicle, a flying car, a high-speed train, etc. Taking a vehicle as an example, the vehicle includes a display area, an electro-acoustic element, a communication element, and a processor. The display area of the vehicle may include an instrument screen, an in-vehicle display area screen, a head-up display that may be implemented on a windshield of the vehicle, etc. A vehicle system running on the vehicle uses a graphical user interface (GUI) to present a displayed content to the user. The display area includes many UI controls, and different display areas may show same or different UI controls. The UI controls may include a card object, an application icon or interface, a folder icon, a multimedia file icon, an operable control for interaction, etc. The electro-acoustic element may be configured to collect the user's speech requests. The vehicle system may send, via the communication element, a speech request to the server, and receive, via the communication element, an operation instruction generated by the server based on the speech request. The processor is configured to perform an operation corresponding to the operation instruction.

For ease of description, embodiments are described below by taking the vehicle as an example.

Specifically, a voice interaction software development kit (SDK) is pre-installed in a vehicle system of the vehicle. The software development kit refers to a kit developed to implement a certain function of product software. The vehicle system may be provided therein with a map client. The map client refers to a vehicle map navigation application. When the map client is running, navigation scenario information of a standard map interface of the map client may be displayed in real time in the display area of the vehicle. The navigation scenario information of the standard definition map interface may be synchronized to the server through the voice interaction software development kit. The navigation scenario information of the standard definition map interface may be synchronized to a server via the voice interaction software development kit which is a hub of voice interaction between the vehicle and the server. On the one hand, the voice interaction software development kit defines a specification for generating a speech request. On the other hand, the voice interaction software development kit can synchronize the navigation scenario information of the standard definition map interface in the vehicle to the server, and transmit an operation instruction generated by the server in response to the speech request to the map client.

The map client may introduce the voice interaction software development kit into build.gradle of a project in the following way:
api(project.getDependency('com.xiaopeng,lib:lib speech protocol: 1.16.0-SNAPSHOT')){ changing=true}.

When the vehicle travels under control of NGP, and when a navigation scenario running on the map client is surrounding reality (SR) display for autonomous driving, if adjustment of display of energy supplement points for the vehicle on the map client is required, it is necessary to exit from the surrounding reality display mode to display a traditional standard definition map, and then adjustment of the display of energy supplement points may be completed by touching and tapping a corresponding control on the standard definition map interface. The map client may acquire the user's speech request via the voice interaction software development kit, the speech request being related to the navigation scenario information of the standard definition map interface.

It should be noted that the energy supplement points may include charging piles or charging piles. For example, in the present disclosure, the energy supplement points may be charging piles. That is to say, the vehicle may adjust the display of charging piles on the map client based on the instruction callback.

In some embodiments, step 01 specifically includes acquiring the user's speech request when the map client is currently in a surrounding reality display mode.

Because the speech request is related to the energy supplement points for the vehicle, when the map client is in an autonomous driving surrounding reality display mode, the voice interaction software development kit acquires the speech request related to display of energy supplement points for the vehicle.

Referring to Fig. 3, for example, when the vehicle is travelling under the control of NGP, and the map client is in a navigation scenario of surrounding reality display for autonomous driving, if the user wants relevant information of the energy supplement points to be displayed on the standard definition map interface, and sends out a speech request of "turn on display of charging piles", the map client may acquire the user's speech request of "turn on display of charging piles" via the voice interaction software development kit, and transmit the speech request to the server; and the server parses the speech request.

Furthermore, after acquiring the user's speech request, the map client may transmit the speech request to the server via the voice interaction software development kit; and the server, in response to the speech request, generates the instruction to display energy supplement points.

It may be appreciated that for the map client, in the case of the navigation scenario of surrounding reality display for autonomous driving, the user can implement adjustment of the display of energy supplement points on the map client only by exiting, by way of an input (such as a tap) into a graphical user interface of the navigation scenario, from the interface of surrounding reality display for automatic driving displayed by the current graphic user interface to a standard map interface, and then performing a voice interaction under the standard definition map interface. In the case that the vehicle is currently travelling, interactions of the user via the graphical user interface of the map client by touching and tapping while driving may pose safety risks.

In some embodiments, the map client may also send the navigation scenario information together with the speech request to the server via the voice interaction software development kit. The navigation scenario information enables an interactive scenario where the vehicle is currently in to be clearer to the server when the server performs speech recognition and semantic parsing, which effectively limits a scope of the semantic parsing. It may be appreciated that if the server fails to synchronously acquire the navigation scenario information, the server may generate during the semantic parsing an instruction deviating from the instruction to display energy supplement points. In the case that the server synchronously acquires the navigation scenario information, the server may determine that the user's intention is to find an energy supplement point for energy supplement and thus control the vehicle to display energy supplement points on the standard definition map interface of the map client. In this way, the voice control can be more intelligent and the success rate of achieving real intentions can be increased. An improved user experience can thus be delivered.

After generating the corresponding instruction to display energy supplement points based on the speech request, the server may send the instruction to display energy supplement points back to the voice interaction software development kit. After receiving the instruction to display energy supplement points, the voice interaction software development kit generates the corresponding instruction callback based on the instruction to display energy supplement points.

Further, after receiving the instruction callback issued by the voice interaction software development kit based on the instruction to display energy supplement points, the map client may adjust the display of energy supplement points on the map client based on the instruction callback.

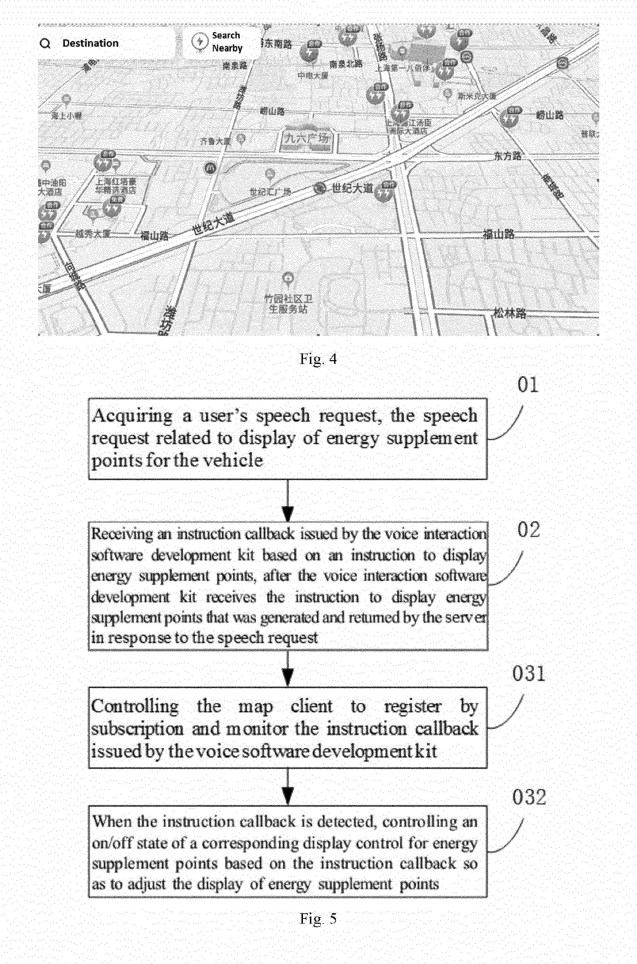

Referring to Fig. 4, for example, if the instruction callback issued by the voice interaction software development kit is "turn on display of charging piles", then the map client may display charging piles on the map client based on the instruction callback "turn on display of charging piles".

In addition, in the present disclosure, the driver may perform voice interaction with the map client at any time during driving, such as in a driving or parking state. Especially in the driving state, interactions with the map client is implemented by way of voice input instead of the user's manual input, which is conducive to driving safety.

Preferably, referring to Fig. 5, in some embodiments, step 03 includes the following sub-steps.

In step 031, the map client is controlled to register by subscription and monitor the instruction callback issued by the voice interaction software development kit.

In step 032, when the instruction callback is detected, an on/off state of a corresponding display control for energy supplement points is controlled based on the instruction callback so as to adjust the display of energy supplement points.

In some embodiments, sub-steps 031 and 032 may be implemented by the control module 130. In other words, the control module 130 is configured to control the map client to register by subscription and monitor the instruction callback issued by the voice interaction software development kit, and control, when the instruction callback is detected, an on/off state of a corresponding display control for energy supplement points based on the instruction callback so as to adjust the display of energy supplement points.

In some embodiments, the processor is used to control the map client to register by subscription and monitor the instruction callback issued by the voice interaction software development kit, and control, when the instruction callback is detected, an on/off state of a corresponding display control for energy supplement points based on the instruction callback so as to adjust the display of energy supplement points.

It may be appreciated that the control usually includes but not limited to the following information: control identification, control type, control action type, voice expression for the control, etc. The control identification is unique to each control, and may be used to find the control. The control type may include groups, text, images, etc. The control action type may include tapping, swiping, etc.

In the present embodiment, the control includes a display control for energy supplement points and an energy supplement point position searching control. The display control for energy supplement points is used to control relevant information of energy supplement points on the standard definition map interface. The relevant information of energy supplement points may include but is not limited to position information of energy supplement points, attributes of energy supplement points, number of energy supplement points, etc. The energy supplement point position searching control is used to search for a position of an energy supplement point.

In sub-step 031, the map client may register by subscription and monitor the instruction callback issued by the voice interaction software development kit. The subscription is implemented through the following way:
private AbsNaviListener mNaviListener=new NaviListeneriImpl (navilmodel:this);//Global speech processing
SpeechUntils.Subscribe(NaviNode.class,mNaviListener).

When detecting the instruction callback issued by the voice interaction software development kit that corresponds to the instruction to display energy supplement points, the map client responds to the instruction callback and switches the on/off state of the display control for energy supplement points on the map client based on the instruction callback so as to adjust the display of energy supplement points on the standard definition map interface. Switching of the on/off state of the display control for energy supplement points allows displaying of the standard definition map interface corresponding to the speech request based on the switched on/off state of the display control for energy supplement points. For example, in some examples, in the case that the voice interaction software development kit issues the instruction callback based on the instruction to display energy supplement points, if the map client detects the instruction callback issued by the voice interaction software development kit based on the instruction to display energy supplement points, the map client may, in response to the instruction callback, sets the on/off state of the display control for energy supplement points to "on", enabling charging piles to be displayed on the standard definition map interface.

In this way, the map client can generate the standard definition map interface corresponding to the speech request based on the on/off state of the display control for energy supplement points.

Preferably, referring to Fig. 5, in some embodiments, step 032 further includes the following sub-steps.

In sub-step 0321, the instruction callback is converted into a voice control event in response to the instruction callback.

In sub-step 0322, the voice control event is converted to generate a modification command.

In sub-step 0323, the modification command is executed to control the on/off state of the display control for energy supplement points.

In some embodiments, sub-steps 0321 to 0323 may be implemented by the control module 130.

In other words, the control module 130 is configured to convert the instruction callback into a voice control event in response to the instruction callback, convert the voice control event to generate a modification command, and execute the modification command to control the on/off state of the display control for energy supplement points.

In some embodiments, the processor is configured to convert the instruction callback into a voice control event in response to the instruction callback, convert the voice control event to generate a modification command, and execute the modification command to control the on/off state of the display control for energy supplement points.

Specifically, after the map client receives the instruction callback issued by the voice interaction software development kit, the map client performs corresponding traffic processing and finally implements switching of the display of energy supplement points for the vehicle. For example, in some examples, when the voice instruction callback detected by the map client is onControlChargeOpen (turn on display of charging piles), the map client may respond to the instruction callback and convert the same into a SPEECH-CMD-CONTROL-CHARGE-OPEN event (voice control event), generate a modification command (ModifySettingCommand) labelled "OPEN-CHARGE" from the SPEECH-CMD-CONTROL-CHARGE-OPEN event, i.e., "turn on charging pile", and set the state of the display control for energy supplement points to "on" state based on the label "OPEN-CHARGE" of the modification command.

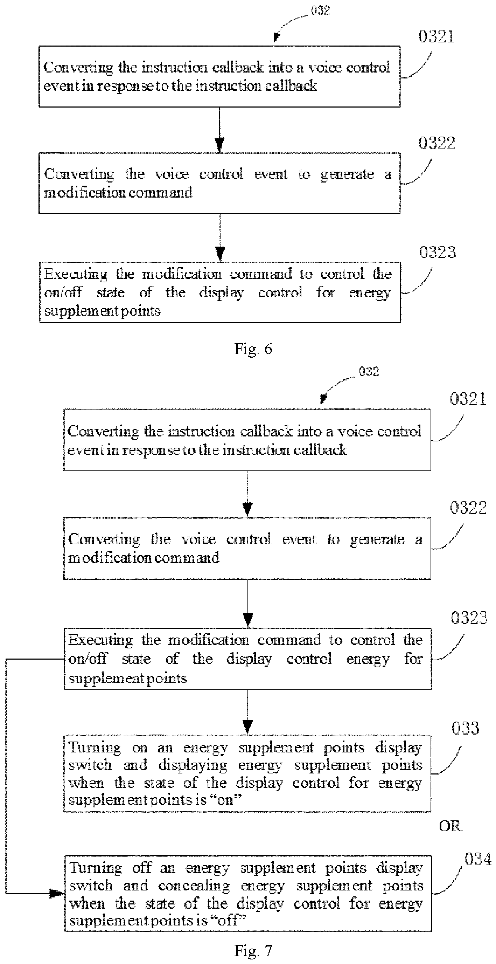

Preferably, referring to Fig. 6, in some embodiments, step 03 further includes the following sub-steps.

In sub-step 033, when the on/off state of the display control for energy supplement points is "on", an energy supplement points display switch is turned on and energy supplement points are displayed.

Alternatively, in sub-step 034, when the on/off state of the display control for energy supplement points is "off", an energy supplement points display switch is turned off and energy supplement points are concealed.

In some embodiments, sub-steps 033 and 034 may be implemented by the control module 130. In other words, the control module 130 is configured to: turn on an energy supplement points display switch and display energy supplement points, when the on/off state of the display control for energy supplement points is "on"; or turn off an energy supplement points display switch and conceal energy supplement points, when the on/off state of the display control for energy supplement points is "off".

In some embodiments, the processor is configured to: turn on an energy supplement points display switch and display energy supplement points, when the on/off state of the display control for energy supplement points is "on"; or turn off an energy supplement points display switch and conceal energy supplement points, when the on/off state of the display control for energy supplement points is "off".

Referring to Figs. 4, 8, and 9, the standard definition map interface includes an energy supplement points display switch. The energy supplement points display switch is used to show the on/off state of the display control for energy supplement points. When the on/off state of the display control for energy supplement points is "on", the energy supplement points display switch is turned on and energy supplement points are displayed, and when the on/off state of the display control for energy supplement points is "off", the energy supplement points display switch is turned off and energy supplement points are concealed.

Energy supplement points are displayed on the map navigation interface in the form of energy supplement point textures. The energy supplement point textures may include free energy supplement points, ordinary energy supplement points, and cooperative energy supplement points. Free energy supplement point means that the energy supplement points can provide energy for vehicles for free. Ordinary energy supplement points means that the energy supplement points provide energy at charge, and an example thereof is a public charging pile. Cooperative energy supplement points means that the energy supplement points are in a cooperative relationship with a vehicle manufacturer (meaning that the energy supplement points provide energy at charge). In this way, the user may select based on the energy supplement point textures displayed on the standard definition map interface.

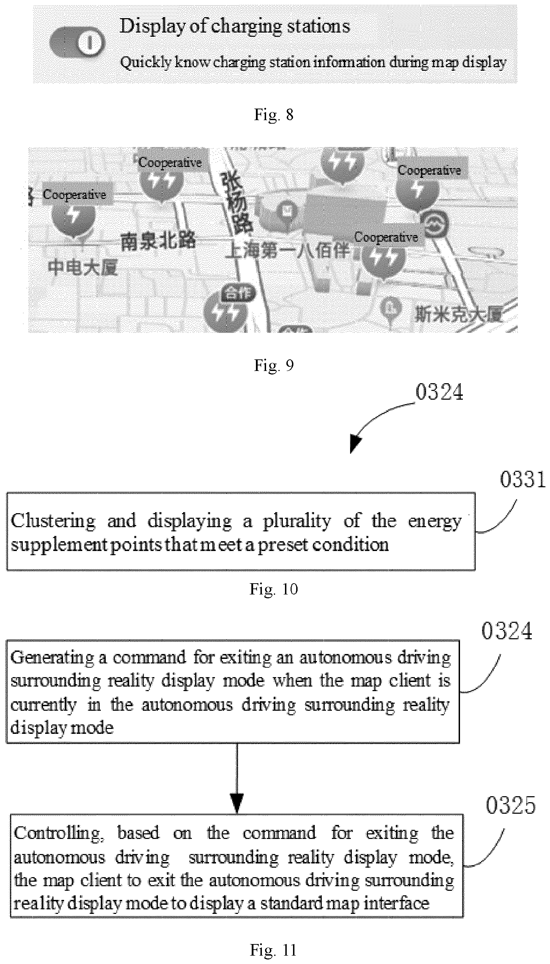

Referring to Fig. 10, in some embodiments, step 033 further includes the following sub-steps.

In sub-step 0331, a plurality of energy supplement points that meet a preset condition are clustered and displayed.

In some embodiments, the sub-step 0331 may be implemented by the control module 130. In other words, the control module 130 may be configured to cluster and display a plurality of energy supplement points that meet a preset condition.

In some embodiments, the processor may cluster and display a plurality of energy supplement points that meet a preset condition.

The preset condition may be that a map scale and distances between energy supplement points meet respective preset threshold requirements or a cluster display instruction is received.

For example, in the present embodiment, when a map scale is greater than a preset threshold, a plurality of energy supplement points with distances therebetween less than a preset value are clustered and displayed. The preset value may be 300 meters, 500 meters, 800 meters, 1000 meters, or even larger. The preset threshold may be 500 meters. That is to say, when the map scale is greater than 500 meters, a plurality of energy supplement points with distances therebetween less than the preset value are clustered and displayed as one single energy supplement point on the standard definition map interface. When the scale is less than 500 meters, energy supplement points corresponding to the energy supplement points are precisely displayed on the standard definition map interface.

It may be appreciated that the larger the map scale is, the wider an area displayed on the map navigation interface is, and the greater the number of energy supplement points is. If the number of energy supplement point textures is too great, it may affect readability of the standard definition map interface. Therefore, in order to avoid overly dense display of energy supplement point textures on the standard definition map interface when the map scale is too large, in the case that the map scale is greater than the preset threshold, a plurality of energy supplement points with distances therebetween less than the preset value are clustered and displayed as one single energy supplement point texture, and the energy supplement point texture may be displayed with the number of energy supplement points that are clustered.

Referring to Fig. 11, in some embodiments, after converting the instruction callback into the voice control event in response to the instruction callback, step 03 further includes the following sub-steps.

In sub-step 0324, when the map client is currently in an autonomous driving surrounding reality display mode, a command for exiting the autonomous driving surrounding reality display mode is generated.

In sub-step 0325, the map client is controlled, based on the command for exiting the autonomous driving surrounding reality display mode, to exit the autonomous driving surrounding reality display mode to display the standard definition map interface.

In some embodiments, sub-step 0324 may be implemented by the generation module 120, and sub-step 0325 may be implemented by the control module 130. In other words, the generation module 120 is configured to generate, when the map client is currently in an autonomous driving surrounding reality display mode, a command for exiting the autonomous driving surrounding reality display mode; and the control module 130 is configured control, based on the command for exiting the autonomous driving surrounding reality display mode, the map client to exit the autonomous driving surrounding reality display mode to display the standard definition map interface.

In some embodiments, the processor is configured to generate, when the map client is currently in an autonomous driving surrounding reality display mode, a command for exiting the autonomous driving surrounding reality display mode, and control, based on the command for exiting the autonomous driving surrounding reality display mode, the map client to exit the autonomous driving surrounding reality display mode to display the standard definition map interface.

It should be noted that in the present disclosure, if NGP is enabled during travelling of the vehicle, the map client is capable of implementing surrounding reality display for autonomous driving. Under surrounding reality display for autonomous driving, changes in vehicle surroundings information may be simulated in real time, so that the user can see driving conditions of the vehicle under autonomous driving at any time. If it is hoped to display energy supplement points on the map client, it is necessary to exit from the autonomous driving surrounding reality display mode to the standard definition map interface, and then a corresponding switching operation can be performed.

Therefore, after the map client registers and detects the instruction callback generated by the voice interaction software development kit of energy supplement points change on the map client, the map client converts the instruction callback into a recognizable voice control event, and may perform an execution condition check. When the vehicle is under NGP, a command for exiting surrounding reality display for autonomous driving may be generated, and the map client may be controlled, based on the command for exiting the autonomous driving surrounding reality display mode, to exit the autonomous driving surrounding reality display mode to display the standard definition map interface.

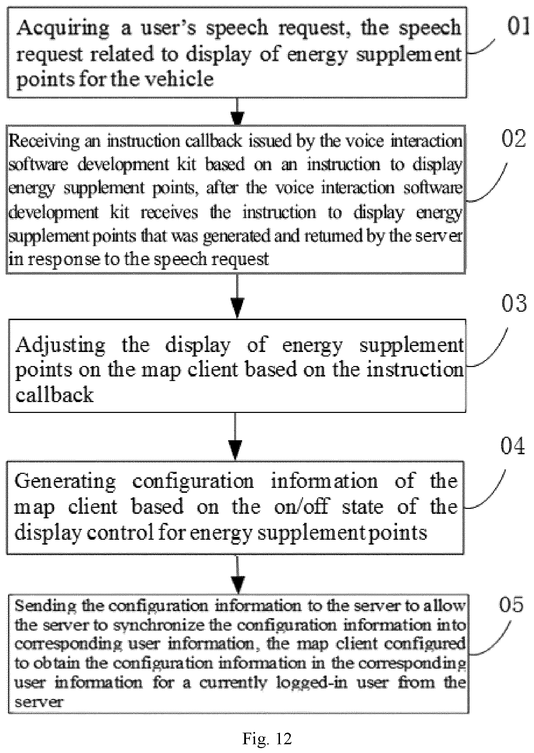

Preferably, referring to Fig. 12, in some embodiments, after step 03, the voice interaction method further includes the following steps.

In step 04, configuration information of the map client is generated based on the on/off state of the display control for energy supplement points.

In step 05, the configuration information is sent to the server to allow the server to synchronize the configuration information into corresponding user information, and the map client is configured to obtain configuration information in corresponding user information for a currently logged-in user from the server.

In some embodiments, step 04 may be implemented by the generation module 120, and step 05 may be implemented by the control module 130. In other words, the generation module 120 is also configured to generate configuration information of the map client based on the on/off state of the display control for energy supplement points; and the control module 130 is also configured to send the configuration information the server to allow the server to synchronize the configuration information into corresponding user information. The map client is configured to obtain configuration information in corresponding user information for a currently logged-in user from the server.

In some embodiments, the processor is configured to generate configuration information of the map client based on the on/off state of the display control for energy supplement points. The processor is also configured to send the configuration information the server to allow the server to synchronize the configuration information into corresponding user information. The map client is configured to obtain configuration information in corresponding user information for a currently logged-in user from the server.

Specifically, the map client is configured to obtain, based on an account of the current logged-in user, configuration information associated with the account from a user center server (a server that records information such as a user account, personal information, frame number of the purchased vehicle, etc.), so as to modify a local database based on the configuration information. As such, after the user logs into the user account at a map client of a different vehicle, the map client may modify configuration of the map client in a local database based on configuration information associated with the account acquired from the user center server, so that the configuration of the map client conforms to the user's habits, thereby improving user experience. Moreover, after the user account is logged in at the map client, each time the on/off state of the display control for energy supplement points is changed, the configuration information of the map client may be transmitted to the server to synchronize the configuration information to the corresponding user information, so that the user information in the cloud is synchronized with the configuration information of the map client at which the user account is logged in. In this way, after the user logs into the user account at the map client, the map client may be synchronized with the configuration information in the corresponding user information in the server.

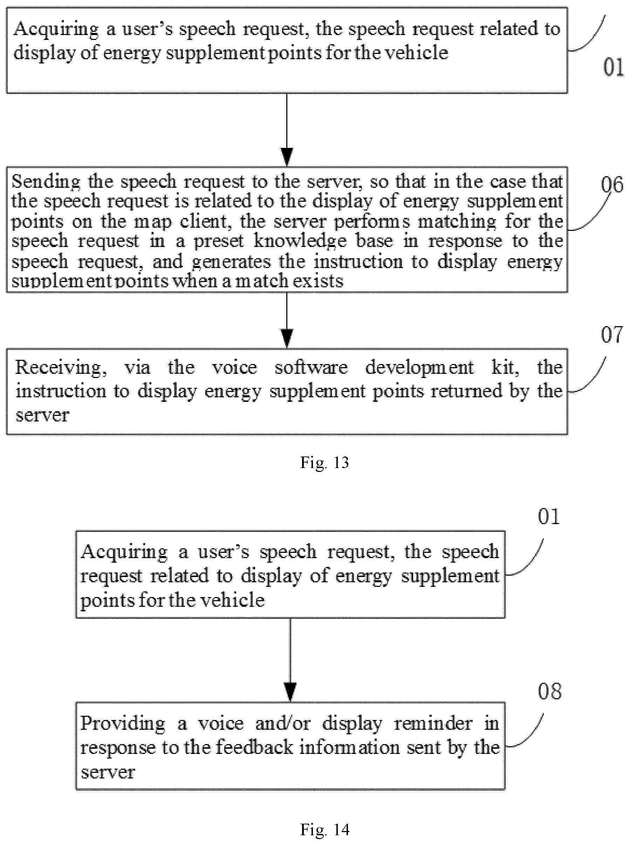

Preferably, referring to Fig. 13, in some embodiments, after step 01, the voice interaction method further includes the following steps.

In step 06, the speech request is sent to the server, so that in the case that the speech request is related to the display of energy supplement points on the map client, the server performs matching for the speech request in a preset knowledge base in response to the speech request, and generates the instruction to display energy supplement points when a match exists.

In step 07, the instruction to display energy supplement points returned by the server is received via the voice interaction software development kit.

In some embodiments, steps 06 and 7 may be implemented by the control module 130. In other words, the control module 130 is further configured to: send the speech request to the server, so that in the case that the speech request is related to the display of energy supplement points on the map client, the server performs matching for the speech request in a preset knowledge base in response to the speech request and generates the instruction to display energy supplement points when a match exists; and receive, via the voice interaction software development kit, the instruction to display energy supplement points returned by the server.

In some embodiments, the processor is configured to send the speech request to the server, so that in the case that the speech request is related to the display of energy supplement points on the map client, the server performs matching for the speech request in a preset knowledge base in response to the speech request, and generates the instruction to display energy supplement points when a match exists. The processor is further configured to receive, via the voice interaction software development kit, the instruction to display energy supplement points returned by the server.

The server may perform a generalization operation on the speech request corresponding to each instruction to display energy supplement points, so that each instruction to display energy supplement points may correspond to a plurality of speech requests. The generalization operation includes, but is not limited to, generalization of synonyms and near-synonyms corresponding to the speech request.

It may be appreciated that that because of effects of the user's accent, speaking habits, in-vehicle environment, radio, music, etc., the speech request may not completely correspond to the instruction to display energy supplement points, and consequently the speech request cannot match the instruction to display energy supplement points. For this reason, a generalization operation is performed on the speech request corresponding to each instruction to display energy supplement points. As such, the voice control can be more intelligent and the success rate of achieving real intentions can be further increased, delivering an improved user experience.

Referring to Fig. 14, in some embodiments, the server generates feedback information when a match does not exist, and the voice interaction method further includes the following steps.

In step 08, a voice and/or display reminder is provided in response to the feedback information sent by the server.

In some embodiments, step 08 may be implemented by the control module 130. In other words, the control module 130 may be configured to provide a voice and/or display reminder in response to the feedback information sent by the server.

In some embodiments, the processor may further be configured to provide a voice and/or display reminder in response to the feedback information sent by the server.

Specifically, when text data generated by the server based on the speech request does not match a preset instruction to display energy supplement points (e.g., there is no preset instruction to display energy supplement points corresponding to the text data in the knowledge base), then in the case that a match does not exist, feedback information indicating failed matching may be generated and returned to the vehicle, and the map client may provide a voice and/or display reminder in response to the feedback information sent by the server. The voice reminder may be a voice broadcast, and the display reminder may be a UI reminder such as a message popup reminder. For another example, if the feedback information is a voice broadcast instruction, the vehicle may perform voice broadcast in response to the voice broadcast instruction to prompt the user.

In this way, when the map client is not capable of executing the user's speech request related to the display of energy supplement points on the map client, a voice broadcast or a display reminder may be provided to prompt the user, so that the user can learn that the vehicle cannot execute the corresponding speech request.

The present disclosure further provides a voice interaction system. The voice interaction system includes a vehicle and a server. The vehicle includes a map client. The map client has a pre-installed voice interaction software development kit.

The map client is configured to acquire a user's speech request, and transmit the speech request to the server via the voice interaction software development kit. The speech request is related to display of energy supplement points for the vehicle.

The server is configured to receive the speech request sent by the voice interaction software development kit, generate an instruction to display energy supplement points, and send the instruction to display energy supplement points to the voice interaction software development kit.

The map client is further configured to receive, after the voice interaction software development kit receives the instruction to display energy supplement points that was generated and returned by the server in response to the speech request, an instruction callback issued by the voice interaction software development kit based on the instruction to display energy supplement points, and adjust the display of energy supplement points on the map client based on the instruction callback.

According to the voice interaction system of the present disclosure, by preconfiguring a voice interaction software development kit on the map client of the vehicle, when the vehicle acquires a speech request related to display of energy supplement points on the map client, the speech request can be transmitted to a server; the server, after receiving the speech request, generates an instruction to display energy supplement points and returning the instruction to display energy supplement points to the voice interaction software development kit; and the map client, after receiving the instruction to display energy supplement points via the voice interaction software development kit, receives an instruction callback issued by the voice interaction software development kit based on the instruction to display energy supplement points, and adjust the display of energy supplement points on the map client. In this way, control of the display of energy supplement points on the map client is implemented by means of speech, which significantly improves user experience and is conducive to driving safety.

In some embodiments, the server includes a preset knowledge base. The server is configured to perform semantic recognition on the speech request to obtain text data, perform matching for the text data in the preset knowledge base, and generate the instruction to display energy supplement points when a match for the text data exists in the preset knowledge base, or generate feedback information when a match for the text data does not exist in the preset knowledge base.

Embodiments of the present disclosure further provide a non-volatile computer-readable storage medium having a computer program stored thereon. The computer program, when executed by one or more processors, implements the voice interaction method according to any one of the above-mentioned embodiments. Those skilled in the art may appreciate that the implementation of all or some of the steps in the methods of the above embodiments can be completed by means of a computer program instructing associated software. The program may be stored on a non-volatile computer-readable storage medium, and may implement, when being executed, for example, the steps as described in the above method embodiments. The storage medium may be a magnetic disk, an optical disc, a read-only memory (ROM), or the like.

In the description of this specification, description concerning the reference terms "an embodiment", "some embodiments", "exemplary embodiment", "example", "specific example" or "some examples" means that specific features, structures, materials or characteristics described in combination with the embodiment(s) or example(s) are included in at least one embodiment or example of the present disclosure. In this specification, the exemplary representation of the above terms does not necessarily refer to a same embodiment or example. Moreover, specific features, structures, materials, or characteristics described may be combined in a suitable manner in any one or more embodiments or examples. In addition, those skilled in the art may combine different embodiments or examples and features of different embodiments or examples described in this specification together without conflicting with one another other. Meanwhile, description concerning the reference terms "first", "second" and the like is intended to distinguish a same type of operations or similar operations. The terms "first" and "second" may be in a sequential logical relationship in some embodiments and may not necessarily be in a logical or sequential relationship in some other embodiments; and such a relationship needs to be determined depending on the actual embodiment and should not be determined only by literal meanings.

Description of any process or method in the flowcharts or otherwise described herein may be interpreted to represent a module, a fragment, or a portion of codes including one or more executable instructions for implementing steps of a particular logical function or process, and the scope of each preferred embodiment of the present disclosure covers additional implementations. Functions may not be executed in orders shown or discussed, including substantially simultaneous or reverse orders in which execution is performed based on functions involved, as should be appreciated by those skilled in the art to which the embodiments of the present disclosure belong.

The above illustrates and describes embodiments of the present disclosure, but it should be appreciated that the above embodiments are exemplary and are not to be construed as limiting the present disclosure. Those skilled in the art may make changes, modifications, substitutions and variations to the above embodiments within the scope of the present disclosure.

## Claims

1. A voice interaction method for a vehicle, wherein the vehicle communicates with a server and has a voice interaction software development kit pre-installed on a map client thereof, the voice interaction method comprising:
acquiring a user's speech request for display of energy supplement points when the map client is currently in a surrounding reality display mode (01);
receiving an instruction callback issued by the voice interaction software development kit based on an instruction to display energy supplement points, after the voice interaction software development kit receives the instruction to display energy supplement points that was generated and returned by the server in response to the speech request (02); and
controlling the display of energy supplement points on the map client based on the instruction callback (03), wherein said controlling comprises:
generating a command for exiting the surrounding reality display mode (0324) based on the instruction callback, and
controlling, based on the generated command, the map client to exit the surrounding reality display mode and displaying a standard map interface (0325).

2. The voice interaction method according to claim 1, wherein the energy supplement points are displayed on the map client in the form of energy supplement point graphics, and the energy supplement point graphics include free energy supplement point graphics, ordinary energy supplement point graphics, and cooperative energy supplement point graphics.

3. The voice interaction method according to claim 1, wherein a generalization operation is performed by the server on the speech request corresponding to each instruction to display energy supplement points, such that each instruction to display energy supplement points may correspond to a plurality of speech requests.

4. The voice interaction method according to claim 1, wherein said controlling the display of energy supplement points on the map client based on the instruction callback (03) comprises:
controlling the map client to register by subscription and monitor the instruction callback issued by the voice interaction software development kit (031); and
when the instruction callback is detected, controlling an on/off state of a corresponding display control for energy supplement points based on the instruction callback so as to adjust the display of energy supplement points (032).

5. The voice interaction method according to claim 4, wherein said controlling the on/off state of the corresponding display control for energy supplement points based on the instruction callback so as to control the display of energy supplement points (032) comprises:
converting the instruction callback into a voice control event in response to the instruction callback (0321);
converting the voice control event to generate a command (0322); and
executing the command to control the on/off state of the display control for energy supplement points (0323).

6. The voice interaction method according to claim 5, wherein said controlling the on/off state of the corresponding display control for energy supplement points based on the instruction callback so as to control
the display of energy supplement points (032) further comprises:
turning on an energy supplement points display switch and displaying energy supplement points when the state of the display control for energy supplement points is "on" (033); and
turning off an energy supplement points display switch and concealing energy supplement points when the state of the display control for energy supplement points is "off' (034).

7. The voice interaction method according to claim 6, wherein said turning on the energy supplement points display switch and displaying the energy supplement points when the state of the display control for energy supplement points is "on" (033) comprises:
clustering and displaying a plurality of the energy supplement points that meet a preset condition (0331).

8. The voice interaction method according to claim 5, wherein after said adjusting the display of energy supplement points on the map client based on the instruction callback (03), the voice interaction method further comprises:
generating configuration information of the map client based on the on/off state of the display control for energy supplement points (04); and
sending the configuration information to the server to allow the server to synchronize the configuration information into corresponding user information, wherein the map client is configured to obtain the configuration information in the corresponding user information for a currently logged-in user from the server (05).

9. A voice interaction apparatus (100) for a vehicle, wherein the vehicle communicates with a server and has a pre-installed voice interaction software development kit on a map client thereof, the voice interaction apparatus (100) comprising:
an acquisition module (110), configured to acquire a user's speech request for display of energy supplement points for the vehicle when the map client is currently in a surrounding reality display mode(01);
a generation module (120), configured to receive, after the voice interaction software development kit receives an instruction to display energy supplement points that was generated and returned by the server in response to the speech request, an instruction callback issued by the voice interaction software development kit based on the instruction to display energy supplement points (02); and
a control module (130), configured to control the display of energy supplement points on the map client based on the instruction callback (03), wherein said control of the display of energy supplement points comprises:
generating a command for exiting the surrounding reality display mode (0324) based on the instruction callback, and
controlling, based on the generated command, the map client to exit the surrounding reality display mode and displaying a standard map interface (0325).

10. A voice interaction system, comprising a vehicle and a server, the vehicle comprising a map client with a pre-installed voice interaction software development kit, wherein:
the map client is configured to acquire a user's speech request for display of energy supplement points for the vehicle when the map client is currently in a surrounding reality display mode (01), and transmit the speech request to the server;
the server is configured to receive the speech request from the map client, generate an instruction to display energy supplement points based on the speech request, and return the instruction to display energy supplement points to the voice interaction software development kit; and
the map client is further configured to receive, after the voice interaction software development kit receives the instruction to display energy supplement points, an instruction callback issued by the voice interaction software development kit based on the instruction to display energy supplement points (02), and control the display of energy supplement points on the map client based on the instruction callback (03), wherein said control of the display of energy supplement points comprises:
generating a command for exiting the surrounding reality display mode (0324) based on the instruction callback, and
controlling, based on the generated command, the map client to exit the surrounding reality display mode and displaying a standard map interface (0325).

11. A vehicle, comprising a processor and memory having a computer program stored thereon which, when executed by the processor, implements the voice interaction method according to any one of claims 1 to 8.

12. A non-volatile computer-readable storage medium having a computer program stored thereon which, when executed by one or more processors, implements the voice interaction method according to any one of claims 1 to 8.

## Patentansprüche

1. Sprachinteraktionsverfahren für ein Fahrzeug, wobei das Fahrzeug mit einem Server kommuniziert und ein Sprachinteraktions-Softwareentwicklungskit, das auf einem Kartenclient davon vorinstalliert ist, aufweist, wobei das Sprachinteraktionsverfahren Folgendes umfasst:
Erfassen einer Sprachanforderung eines Benutzers zur Anzeige von Elektroladestellen, wenn der Kartenclient gerade in einem Umgebungsrealitätsanzeigemodus ist (01);
Empfangen eines Anweisungsrückrufs, der durch das Sprachinteraktions-Softwareentwicklungskit basierend auf einer Anweisung zum Anzeigen von Elektroladestellen ausgegeben wird, nachdem das Sprachinteraktions-Softwareentwicklungskit die Anweisung zum Anzeigen von Elektroladestellen, die durch den Server als Reaktion auf die Sprachanforderung generiert und zurückgesendet worden ist, empfangen hat (02); und
Steuern der Anzeige von Elektroladestellen auf dem Kartenclient basierend auf dem Anweisungsrückruf (03), wobei das Steuern Folgendes umfasst:
Generieren eines Befehls zum Verlassen des Umgebungsrealitätsanzeigemodus (0324) basierend auf dem Anweisungsrückruf und
Steuern, basierend auf dem generierten Befehl, des Kartenclients, sodass er den Umgebungsrealitätsanzeigemodus verlässt, und Anzeigen einer Standardkartenschnittstelle (0325).

2. Sprachinteraktionsverfahren nach Anspruch 1, wobei die Elektroladestellen auf dem Kartenclient in Form von Elektroladestellengrafiken angezeigt werden und die Elektroladestellengrafiken Grafiken für kostenfreie Elektroladestellen, Grafiken für gewöhnliche Elektroladestellen und Grafiken für genossenschaftliche Elektroladestellen enthalten.

3. Sprachinteraktionsverfahren nach Anspruch 1, wobei durch den Server ein Generalisierungsvorgang an der mit jeder Anweisung zum Anzeigen von Elektroladestellen korrespondierenden Sprachanforderung durchgeführt wird, sodass jede Anweisung zum Anzeigen von Elektroladestellen mit einer Vielzahl von Sprachanforderungen korrespondieren kann.

4. Sprachinteraktionsverfahren nach Anspruch 1, wobei das Steuern der Anzeige von Elektroladestellen auf dem Kartenclient basierend auf dem Anweisungsrückruf (03) Folgendes umfasst:
Steuern des Kartenclients zu einer durch eine Anmeldung erfolgenden Registrierung und einer Überwachung des Anweisungsrückrufs, der durch das Sprachinteraktions-Softwareentwicklungskit ausgegeben wird (031); und,
wenn der Anweisungsrückruf detektiert wird, Steuern eines Ein/Aus-Zustands einer korrespondierenden Anzeigesteuerung für Elektroladestellen basierend auf dem Anweisungsrückruf, um die Anzeige von Elektroladestellen anzupassen (032).

5. Sprachinteraktionsverfahren nach Anspruch 4, wobei das Steuern des Ein/Aus-Zustands der korrespondierenden Anzeigesteuerung für Elektroladestellen basierend auf dem Anweisungsrückruf, um die Anzeige von Elektroladestellen zu steuern (032), Folgendes umfasst:
Umwandeln des Anweisungsrückrufs in ein Sprachsteuerungsereignis als Reaktion auf den Anweisungsrückruf (0321);
Umwandeln des Sprachsteuerungsereignisses, um einen Befehl zu generieren (0322); und
Ausführen des Befehls, um den Ein/Aus-Zustand der Anzeigesteuerung für Elektroladestellen zu steuern (0323).

6. Sprachinteraktionsverfahren nach Anspruch 5, wobei das Steuern des Ein/Aus-Zustands der korrespondierenden Anzeigesteuerung für Elektroladestellen basierend auf dem Anweisungsrückruf, um die Anzeige von Elektroladestellen zu steuern (032), ferner Folgendes umfasst:
Einschalten eines Elektroladestellenanzeigeschalters und Anzeigen von Elektroladestellen, wenn der Zustand der Anzeigesteuerung für Elektroladestellen "ein" ist (033); und
Ausschalten eines Elektroladestellenanzeigeschalters und Ausblenden von Elektroladestellen, wenn der Zustand der Anzeigesteuerung für Elektroladestellen "aus" ist (034).

7. Sprachinteraktionsverfahren nach Anspruch 6, wobei das Einschalten des Elektroladestellenanzeigeschalters und das Anzeigen der Elektroladestellen, wenn der Zustand der Anzeigesteuerung für Elektroladestellen "ein" ist (033), Folgendes umfasst:
Clustern und Anzeigen einer Vielzahl der Elektroladestellen, die eine vorgegebene Bedingung erfüllen (0331).

8. Sprachinteraktionsverfahren nach Anspruch 5, wobei das Sprachinteraktionsverfahren nach dem Anpassen der Anzeige von Elektroladestellen auf dem Kartenclient basierend auf dem Anweisungsrückruf (03) ferner Folgendes umfasst:
Generieren von Konfigurationsinformationen des Kartenclients basierend auf dem Ein/Aus-Zustand der Anzeigesteuerung für Elektroladestellen (04); und
Senden der Konfigurationsinformationen an den Server, um zu ermöglichen, dass der Server die Konfigurationsinformationen mit korrespondierenden Benutzerinformationen synchronisiert, wobei der Kartenclient konfiguriert ist, um die Konfigurationsinformationen in den korrespondierenden Benutzerinformationen für einen gerade eingeloggten Benutzer von dem Server zu erhalten (05).

9. Sprachinteraktionsvorrichtung (100) für ein Fahrzeug, wobei das Fahrzeug mit einem Server kommuniziert und ein vorinstalliertes Sprachinteraktions-Softwareentwicklungskit auf einem Kartenclient davon aufweist, wobei die Sprachinteraktionsvorrichtung (100) Folgendes umfasst:
ein Erfassungsmodul (110), das konfiguriert ist, um eine Sprachanforderung eines Benutzers zur Anzeige von Elektroladestellen für das Fahrzeug, wenn der Kartenclient gerade in einem Umgebungsrealitätsanzeigemodus ist, zu erfassen (01);
ein Generierungsmodul (120), das konfiguriert ist, um, nachdem das Sprachinteraktions-Softwareentwicklungskit eine Anweisung zum Anzeigen von Elektroladestellen, die durch den Server als Reaktion auf die Sprachanforderung generiert und zurückgesendet worden ist, empfangen hat, einen Anweisungsrückruf, der durch das Sprachinteraktions-Softwareentwicklungskit basierend auf der Anweisung zum Anzeigen von Elektroladestellen ausgegeben wird, zu empfangen (02); und
ein Steuermodul (130), das konfiguriert ist, um die Anzeige von Elektroladestellen auf dem Kartenclient basierend auf dem Anweisungsrückruf zu steuern (03), wobei das Steuern der Anzeige von Elektroladestellen Folgendes umfasst:
Generieren eines Befehls zum Verlassen des Umgebungsrealitätsanzeigemodus (0324) basierend auf dem Anweisungsrückruf und
Steuern, basierend auf dem generierten Befehl, des Kartenclients, sodass er den Umgebungsrealitätsanzeigemodus verlässt, und Anzeigen einer Standardkartenschnittstelle (0325).

10. Sprachinteraktionssystem, das ein Fahrzeug und einen Server umfasst, wobei das Fahrzeug einen Kartenclient mit einem vorinstallierten Sprachinteraktions-Softwareentwicklungskit umfasst, wobei:
der Kartenclient konfiguriert ist, um eine Sprachanforderung eines Benutzers zur Anzeige von Elektroladestellen für das Fahrzeug, wenn der Kartenclient gerade in einem Umgebungsrealitätsanzeigemodus ist, zu erfassen (01) und die Sprachanforderung an den Server zu übertragen;
der Server konfiguriert ist, um die Sprachanforderung von dem Kartenclient zu empfangen, eine Anweisung zum Anzeigen von Elektroladestellen basierend auf der Sprachanforderung zu generieren und die Anweisung zum Anzeigen von Elektroladestellen an das Sprachinteraktions-Softwareentwicklungskit zurückzusenden; und
der Kartenclient ferner konfiguriert ist, um, nachdem das Sprachinteraktions-Softwareentwicklungskit die Anweisung zum Anzeigen von Elektroladestellen empfangen hat, einen Anweisungsrückruf, der durch das Sprachinteraktions-Softwareentwicklungskit basierend auf der Anweisung zum Anzeigen von Elektroladestellen ausgegeben wird, zu empfangen (02) und die Anzeige von Elektroladestellen auf dem Kartenclient basierend auf dem Anweisungsrückruf zu steuern (03), wobei das Steuern der Anzeige von Elektroladestellen Folgendes umfasst:
Generieren eines Befehls zum Verlassen des Umgebungsrealitätsanzeigemodus (0324) basierend auf dem Anweisungsrückruf und
Steuern, basierend auf dem generierten Befehl, des Kartenclients, sodass er den Umgebungsrealitätsanzeigemodus verlässt, und Anzeigen einer Standardkartenschnittstelle (0325).

11. Fahrzeug, das einen Prozessor und einen Speicher mit einem darin gespeicherten Computerprogramm umfasst, das, wenn es durch den Prozessor ausgeführt wird, das Sprachinteraktionsverfahren nach einem der Ansprüche 1 bis 8 implementiert.

12. Nichtflüchtiges, computerlesbares Speichermedium mit einem darin gespeicherten Computerprogramm, das, wenn es durch einen oder mehrere Prozessoren ausgeführt wird, das Sprachinteraktionsverfahren nach einem der Ansprüche 1 bis 8 implementiert.

## Revendications

1. Procédé d'interaction vocale pour véhicule, dans lequel le véhicule communique avec un serveur et dispose d'un client de cartographie sur lequel est préinstallé un kit de développement logiciel d'interaction vocale, le procédé d'interaction vocale comprenant :
l'acquisition d'une demande vocale d'un utilisateur requérant l'affichage de points de supplément d'énergie lorsque le client de cartographie est présentement dans un mode d'affichage de réalité environnante (01) ;
la réception d'un rappel d'instruction émis par le kit de développement logiciel d'interaction vocale sur la base d'une instruction d'afficher des points de supplément d'énergie, après que le kit de développement logiciel d'interaction vocale a reçu l'instruction d'afficher des points de supplément d'énergie qui a été générée et renvoyée par le serveur en réponse à la demande vocale (02) ; et
la commande de l'affichage de points de supplément d'énergie sur le client de cartographie sur la base du rappel d'instruction (03), dans lequel ladite commande comprend :
la génération d'une commande de sortie du mode d'affichage de réalité environnante (0324) sur la base du rappel d'instruction, et
la commande, sur la base de la commande générée, du client de cartographie pour sortir du mode d'affichage de réalité environnante et l'affichage d'une interface de carte standard (0325).

2. Procédé d'interaction vocale selon la revendication 1, dans lequel les points de supplément d'énergie sont affichés sur le client de cartographie sous la forme de graphiques de points de supplément d'énergie, et les graphiques de points de supplément d'énergie comportent des graphiques de points de supplément d'énergie libres, des graphiques de points de supplément d'énergie ordinaires et des graphiques de points de supplément d'énergie coopératifs.

3. Procédé d'interaction vocale selon la revendication 1, dans lequel le serveur réalise une opération de généralisation sur la demande vocale correspondant à chaque instruction d'afficher des points de supplément d'énergie, de telle sorte que chaque instruction d'afficher de points de supplément d'énergie puisse correspondre à une pluralité de demandes vocales.

4. Procédé d'interaction vocale selon la revendication 1, dans lequel ladite commande de l'affichage de points de supplément d'énergie sur le client de cartographie sur la base du rappel d'instruction (03) comprend :
la commande du client de cartographie pour l'inscrire par abonnement et surveiller le rappel d'instruction émis par le kit de développement logiciel d'interaction vocale (031) ; et
lorsque le rappel d'instructions est détecté, la commande d'un état activé/désactivé d'une commande d'affichage correspondante de points de supplément d'énergie sur la base du rappel d'instruction afin d'ajuster l'affichage de points de supplément d'énergie (032).

5. Procédé d'interaction vocale selon la revendication 4, dans lequel ladite commande de l'état activé/désactivé de la commande d'affichage correspondante de points de supplément d'énergie sur la base du rappel d'instruction de manière à commander l'affichage de points de supplément d'énergie (032) comprend :
la conversion du rappel d'instruction en un événement de commande vocale en réponse au rappel d'instruction (0321) ;
la conversion de l'événement de commande vocale pour générer une commande (0322) ; et
l'exécution de la commande pour commander l'état activé/désactivé de la commande d'affichage de points de supplément d'énergie (0323).

6. Procédé d'interaction vocale selon la revendication 5, dans lequel ladite commande de l'état activé/désactivé de la commande d'affichage correspondante de points de supplément d'énergie sur la base du rappel d'instruction de manière à commander l'affichage de points de supplément d'énergie (032) comprend en outre :
l'activation d'un commutateur d'affichage de points de supplément d'énergie et l'affichage de points de supplément d'énergie lorsque l'état de la commande d'affichage de points de supplément d'énergie est « activé » (033) ; et
la désactivation du commutateur d'affichage de points de supplément d'énergie et le masquage de points de supplément d'énergie lorsque l'état de la commande d'affichage de points de supplément d'énergie est « désactivé » (034).

7. Procédé d'interaction vocale selon la revendication 6, dans lequel ladite activation du commutateur d'affichage de points de supplément d'énergie et ledit affichage des points de supplément d'énergie lorsque l'état de la commande d'affichage de points de supplément d'énergie est « activé » (033) comprend :
le regroupement et l'affichage d'une pluralité de points de supplément d'énergie qui satisfont une condition prédéfinie (0331).

8. Procédé d'interaction vocale selon la revendication 5, le procédé d'interaction vocale comprenant en outre, après ledit ajustement de l'affichage de points de supplément d'énergie sur le client de cartographie sur la base du rappel d'instruction (03) :
la génération d'informations de configuration du client de cartographie sur la base de l'état activé/désactivé de la commande d'affichage de points de supplément d'énergie (04) ; et
l'envoi des informations de configuration au serveur pour permettre au serveur de synchroniser les informations de configuration en informations utilisateur correspondantes, dans lequel le client de cartographie est configuré pour obtenir les informations de configuration dans les informations utilisateur correspondantes pour un utilisateur présentement connecté à partir du serveur (05).

9. Appareil d'interaction vocale (100) pour véhicule, dans lequel le véhicule communique avec un serveur et dispose d'un client de cartographie sur lequel est préinstallé un kit de développement logiciel d'interaction vocale, l'appareil d'interaction vocale (100) comprenant :
un module d'acquisition (110), configuré pour acquérir une demande vocale d'un utilisateur requérant l'affichage de points de supplément d'énergie pour le véhicule lorsque le client de cartographie est présentement dans un mode d'affichage de réalité environnante (01) ;
un module de génération (120), configuré pour recevoir, après que le kit de développement de logiciel d'interaction vocale a reçu une instruction d'afficher des points de supplément d'énergie qui a été générée et renvoyée par le serveur en réponse à la demande vocale, d'un rappel d'instruction émis par le kit de développement de logiciel d'interaction vocale sur la base de l'instruction d'afficher des points de supplément d'énergie (02) ; et
un module de commande (130), configuré pour commander l'affichage de points de supplément d'énergie sur le client de cartographie sur la base du rappel d'instruction (03), dans lequel ladite commande de l'affichage de points de supplément d'énergie comprend :
la génération d'une commande de sortir du mode d'affichage de réalité environnante (0324) sur la base du rappel d'instruction, et
la commande, sur la base de la commande générée, du client de cartographie pour sortir du mode d'affichage de réalité environnante et l'affichage d'une interface de carte standard (0325).

10. Système d'interaction vocale, comprenant un véhicule et un serveur, le véhicule comprenant un client de cartographie avec un kit de développement logiciel d'interaction vocale préinstallé, dans lequel :
le client de cartographie est configuré pour acquérir une demande vocale d'un utilisateur requérant l'affichage de points de supplément d'énergie pour le véhicule lorsque le client de cartographie est présentement dans un mode d'affichage de réalité environnante (01), et transmettre la demande vocale au serveur ;
le serveur est configuré pour recevoir la demande vocale à partir du client de cartographie, générer une instruction d'afficher des points de supplément d'énergie en fonction de la demande vocale, et renvoyer l'instruction d'afficher des points de supplément d'énergie au kit de développement logiciel d'interaction vocale ; et
le client de cartographie est configuré en outre pour recevoir, après que le kit de développement logiciel d'interaction vocale a reçu l'instruction d'afficher des points de supplément d'énergie, un rappel d'instruction émis par le kit de développement logiciel d'interaction vocale sur la base de l'instruction d'afficher des points de supplément d'énergie (02), et commander l'affichage de points de supplément d'énergie sur le client de cartographie sur la base du rappel d'instruction (03), dans lequel ladite commande de l'affichage de points de supplément énergétique comprend :
la génération d'une commande de sortie du mode d'affichage de réalité environnante (0324) sur la base du rappel d'instruction, et
la commande, sur la base de la commande générée, du client de cartographie pour sortir du mode d'affichage de réalité environnante et afficher une interface de carte standard (0325).

11. Véhicule, comprenant un processeur et une mémoire sur laquelle est stocké un programme d'ordinateur qui, à son exécution par le processeur, met en oeuvre le procédé d'interaction vocale selon l'une quelconque des revendications 1 à 8.

12. Support de stockage non volatile lisible par ordinateur sur lequel est stocké un programme d'ordinateur qui, lorsqu'il est exécuté par un ou plusieurs processeurs, met en oeuvre le procédé d'interaction vocale selon l'une quelconque des revendications 1 à 8.
